# EUROPÄISCHE PATENTSCHRIFT

(11) **EP 1 754 097 B1**
(45) Veröffentlichungstag und Bekanntmachung des Hinweises auf die Patenterteilung: **20.08.2008**
(21) Anmeldenummer: 05759514.2
(22) Anmeldetag: 04.05.2005
(51) Int. Cl.: G02C 1/08, G02C 5/22

(54) **BRILLENGESTELL**
SPECTACLE FRAME
MONTURE DE LUNETTES

(30) Priorität: 28.05.2004 DE 102004027012
(43) Veröffentlichungstag der Anmeldung: 21.02.2007
(73) Patentinhaber: Mykita GmbH, 10115 Berlin (DE)
(72) Erfinder: GOTTSCHLING, Harald, 10119 Berlin (DE); KRÜGER, Moritz, 10119 Berlin (DE); HAFFMANS, Philipp, 10437 Berlin (DE); HAFFMANS, Daniel, 10245 Berlin (DE)
(74) Vertreter: Schubert, Klemens
(86) Internationale Anmeldenummer: PCT/DE2005/000866
(87) Internationale Veröffentlichungsnummer: WO 2005/116726

(56) Entgegenhaltungen:
- EP-A- 0 863 424
- EP-A- 0 877 278
- DE-U- 8 902 196
- DE-U- 29 806 448
- GB-A- 734 208
- US-A- 1 779 789

## Beschreibung

Die vorliegende Erfindung betrifft ein Brillengestell und ein Verfahren zur Herstellung eines Brillengestells.

Brillengestelle sind in den verschiedensten Formen und Arten bekannt. Diese Formen unterliegen vielfach der jeweils vorherrschenden Mode. Dabei werden die unterschiedlichsten Arten von Brillengelenken verwendet, um die Fassung der Gläser mit den Brillenbügeln zu verbinden. In vielen Fällen wird diese Verbindung durch ein verschraubtes Gelenk hergestellt. Dies hat den Nachteil, dass bei einer zu festen Verschraubung das Gelenk nur schwer zu bewegen ist oder dass das Gelenk so locker eingestellt ist, dass die schraube leicht hinausfällt. Eine Arretierung der Brillenbügel in eine aufgeklappte beziehungsweise eine zusammengeklappte Stellung ist mit diesen Brillengelenken nicht möglich.

In der US 1,779,789 wird ein Brillengestell mit verschraubten Brillengelenken beschrieben.

Ein schraubenloses Brillengestell wird in der EP 0 877 278 A1 beschrieben.

Ein Brillengestell mit einem Befestigungs- und Schwenkorgan, welches eine schnelle Entfernung der Bügel von und der Augenlinsen aus der mit einem Steg verbundenen Brillenfassung erlaubt, wird in der DE 89 02 196 U beschrieben.

Ein zweiteiliges Brillengestell aus Draht wird in der DE 298 06 448 U1 beschrieben.

In der GB 734,208 wird ein Brillengestell beschrieben, bei dem die Brillenbügel abnehmbar an der Brillenfassung befestigt sind.

Ein weiteres schraubenloses Brillengestell aus Blech mit einem bereits in der Fassung bzw. den Brillenbügeln integrierten Scharniersystem zum Ein- und Ausklappen der Brillenbügel wird in der EP 0 863 424 A1 beschrieben.

Aufgabe der vorliegenden Erfindung ist es daher ein Brillengestell bereit zu stellen, dessen Brillenbügel in einer aufgeklappten und einer zugeklappten Stellung arretierbar sind.

Die Erfindung wird gelöst durch ein Brillengestell, das aus einer frontalen Brillenfassung und zwei Brillenbügeln besteht, die durch Verbindungsklammern (im folgenden durch als "Verschlußklammern" bezeichnet) mit der frontalen Brillenfassung verbunden sind.

Das Brillengestell besteht aus einem flächigen Material, wie zum Beispiel Metall, Karbon oder Kunststoff, das ganz oder teilweise beschichtet sein kann. So ist es möglich, das Brillengestell ganz oder teilweise mit Kunststoffen oder durch Lackschichten zu überziehen.

Bevorzugt ist die frontale Brillenfassung zur Aufnahme von zwei Brillengläsern ausgebildet, wobei die terminalen Enden der frontalen Brillenfassung Öffnungen zur Aufnahme von Brillengläsern aufweisen. Die Öffnungen ermöglichen es, die Brillenfassung so weit zu öffnen, dass Brillengläser in die Aussparungen der frontalen Brillenfassung eingespannt werden können. In dieser Ausführungsform benötigt das Glas eine Nut die vor dem Einsetzen vom Optiker in das Glas gefräst wird.

Die frontale Brillenfassung bildet bevorzugt im Wesentlichen eine Ebene, wobei Anschlusslaschen an den terminalen Enden der Ebene angewinkelt positioniert sind. Weiter bevorzugt bestehen die Anschlusslaschen aus einem oberen und einem unteren Element, die ineinander greifen.

Die Elemente der Anschlusslasche greifen vorzugsweise derart ineinander, dass die Elemente in mindestens drei Raumrichtungen nicht gegeneinander verschiebbar sind.

Im Rahmen der vorliegenden Erfindung werden als Raumrichtungen die sechs Richtungen im Raum verstanden, welche durch ein orthogonales Achsensystem aufgespannt werden und welche entlang der Raumachse jeweils eine "+"und eine "-" Raumrichtung aufweisen. Im Sinne der vorliegenden Erfindung bilden die drei Raumachsen "x", "y" und "z" somit die sechs Raumrichtungen "-x", "+x", "-y", "+y", "-z" und "+z" aus.

Sowohl das obere als auch das untere Element der Anschlusslasche können bewegt werden. Die in der vorliegenden Erfindung angegebenen Bewegungsrichtungen beziehen sich jedoch nur auf das obere Element.

In einer bevorzugten Ausführungsform der Erfindung bestehen die Anschlusslaschen aus einem oberen und einem unteren Element, die zusammen eine schwalbenschwanzähnliche Verbindung bilden. Eine schwalbenschwanzähnliche Verbindung hat den Vorteil, dass sie sehr flach hergestellt werden kann und dennoch eine sichere Verbindung ermöglicht. Eine solche Verbindung würde ein Verschieben der Elemente der Anschlusslasche in vier Raumrichtungen sperren.

Die Elemente der Anschlussläsche weisen bevorzugt mindestens einen Teil mit einer verminderten Materialstärke und mindestens eines der Elemente wenigstens einen Teil in der normalen Materialstärke auf, wobei die Elemente derart ineinander greifen, dass die Teile mit der verminderten Materialstärke jeweils aufeinander liegen. Das Brillengestell wird dabei aus einem flächigen Material durch Fräsen, Ätzen, Auslasern, Stanzen oder Erodieren hergestellt. Weitere geeignete Verfahren sind dem Fachmann bekannt.

Bei diesem Verfahrensschritt wird gleichzeitig eine Materialreduzierung im Bereich des oberen und unteren Elements vorgenommen. Es ist jedoch auch möglich die Materialreduzierung des oberen und unteren Elements in getrennten Arbeitsschritten vorzunehmen.

Das Brillengestell kann derart bearbeitet werden, dass das obere und das untere Element der Anschlusslasche eine verminderte Stärke aufweisen, wobei die Stärke des oberen Elements und des unteren Elements zusammen der normalen Stärke der frontalen Brillenfassung entsprechen. Durch eine solche Ausführungsform wird ein Verschieben der Anschlusslasche in +z-, -z- und -y-Richtung gegeneinander verhindert. Wird nur ein Teil des oberen oder unteren Elements in seiner Materialstärke reduziert, der andere Teil in seiner normalen Materialstärke belassen und das jeweils gegenüberliegende Element derart ausgebildet, dass es ebenfalls in seiner Materialstärke reduziert ist, z.B. jeweils um 50 %, dann greifen die beiden Elemente derart ineinander, dass ein Verschieben in einer +z-, -z-, +x- und -x-Richtung verhindert wird, weil sie gegen den Teil des Elements stoßen, der in der normalen Stärke der frontalen Brillenfassung belassen wurde. In diesem Fall würden die Elemente der Anschlusslasche in vier Raumrichtungen in der Bewegung gesperrt werden.

Eine Ausführungsform, bei der das obere und das untere Element jeweils vollständig in ihrer Materialstärke vermindert sind, würde jedoch nur ein Verschieben der Elemente gegeneinander in einer Raumrichtung verhindern, so dass eine solche Ausführungsform instabil ist. Durch eine Ausbildung des unteren Elements und des oberen Elements mit mehreren Teilen mit reduzierter Materialstärke, bzw. ohne Reduzierung der Materialstärke ist ein Sperren gegen ein Verschieben der Elemente der Anschlusslasche in weitere Richtungen möglich.

Es sind jedoch auch Ausführungsformen möglich, bei denen die Elemente der Anschlusslasche derart ineinander greifen, dass die Elemente in allen sechs Raumrichtungen nicht gegeneinander verschiebbar sind. Eine solche Ausführungsform, kann zum Beispiel dadurch erhalten werden, dass vorzugsweise das obere und das untere Element der Anschlusslasche ineinander verrastbar sind. Dies hat den Vorteil, das auf die Verwendung einer Verbindungsklammer verzichtet werden kann, sie kann aber auch als zusätzliche Sicherung verwendet werden bzw. zur Aufnahme des spiralförmigen Endes der Brillenbügel dienen. Bei einer solchen Ausführungsform sind die Teile mit verminderter Materialstärke derart ausgebildet, dass sie in Richtung auf das jeweils gegenüberliegende obere oder untere Element eine bauliche Verbreiterung aufweisen.

Die Anschlusslasche weist bevorzugt Vorrichtungen auf, die ein Verrutschen der Verbindungsklammer verhindern. Die Anschlusslasche ist das verbindende Element zwischen den Brillenbügeln und der frontalen Brillenfassung. Ebenso erfüllt sie im Zusammenspiel mit der Verbindungsklammer die Aufgabe eines Schließblocks, der die Brillenfassung zusammenhält. Weiterhin ist ein Teilabschnitt der Fläche der Anschlusslasche (dort wo das obere und untere Element ineinander greift), ein wichtiger Bestandteil für die Funktionsweise des Scharniers.

Die Vorrichtungen zur Verhinderung eines Verrutschens können vorzugsweise eine Verstärkung an der Außenseite der Anschlusslasche und/oder eine Vertiefung in der Anschlusslasche sein. Durch diese Elemente ist es möglich, die Verschlussklammer sicher auf der Anschlusslasche zu verrasten. Durch die reversible Befestigung der Verbindungsklammer kann das Brillengestell jederzeit demontiert werden. Es ist jedoch auch möglich, dass die Verschlussklammer dauerhaft verrastet wird, so dass ein Zerlegen des Brillengestells nach der Herstellung nicht mehr möglich ist.

Das obere und dass untere Element der Anschlusslasche bilden eine Ebene, wobei das obere und das untere Element derart ineinander greifen, dass ein Verschieben, zum Beispiel bei einer schwalbenschwanzähnlichen Verbindung, in der Ebene nicht möglich ist.

Die Verbindungsklammer umgreift das obere und das untere Element derart, dass zumindest eine Flanke der Verbindungsklammer sowohl um das obere als auch um das untere Element greift. Dadurch wird ein Herausrutschen eines der Elemente aus der Verbindungsklammer verhindert und eine höhere Stabilität des gesamten Brillengestells erreicht.

In einer bevorzugten Ausführungsform der Erfindung ist die Verbindungsklammer ein Teil des oberen Elements oder des unteren Elements.

Damit ein gegeneinander Verschieben des oberen und unteren Elements verhindert wird (oberes und unteres Element müssen immer in einer Flucht liegen), sind beide Elemente durch eine schwalbenschwanzähnliche Verbindung ineinander verschränkt. Die Verbindung kann jedoch auch durch eine anders geformte Verbindung hergestellt werden. So ist statt einer schwalbenschwanzähnlichen Verbindung auch eine kreisförmige, dreieckige, rechteckige, vieleckige oder sonstige geometrische Ausprägung des einen Elements möglich, das in eine für diese Ausprägung passende Aussparung greift und den Zweck, nämlich eine Verschieben in der Ebene, verhindert.

In einer bevorzugten Ausführungsform der Erfindung besitzt der Brillenbügel ein spiralförmiges Ende. Der Brillenbügel bildet an seinem der frontalen Brillenfassung zugewandten, vorderen Ende eine treppenförmig geprägte Bucht, in die das schmalere, äußere Ende des Brillenbügels zunächst abgewinkelt, dann spiralförmig eingerollt ist.

Das spiralförmig eingerollte Ende ist dabei derart ausgebildet, dass es durch die Öffnung zwischen den Stegen des oberen und unteren Teils der Anschlusslasche greift. Dabei umfasst das spiralförmige Ende des Brillenbügels vorzugsweise die Verbindungsklammer und die Anschlusslasche: Die treppenförmige Prägung am vorderen Ende des Brillenbügels hat dabei die Funktion, den Brillenbügel sicher in seiner montierten Position festzuhalten, sowie das Spiel des Brillenbügels in der horizontalen Ebene im aufgeklappten Zustand zu verhindern.

Die Verbindungsklammer umfasst vorzugsweise die Anschlusslasche, so dass die Verbindung zwischen oberem und unterem Element verschlossen ist. Die Verbindungsklammer hat dabei zwei Funktionen, erstens dient sie dazu, die frontale Brillenfassung nach dem Einsetzen der Gläser zusammenzuhalten und zweitens, dient sie der Führung und Stabilisierung des Brillenbügels in der horizontalen Ebene, sowohl im aufgeschlagenen als auch im eingeschlagenen Zustand.

Die beiden eingerollten Flanken der Verbindungsklammer bilden vorzugsweise einen Kanal, in dem die Spiralfeder des Brillenbügels positioniert ist. Die Verbindungsklammer wird dazu auf die Anschlusslasche geschoben und rastet dort ein. Die beiden eingerollten Flanken der Klammer bilden dann einen Kanal, in dem die Spiralfeder des Brillenbügels nach Montieren des Brillenbügels positioniert ist.

In einer bevorzugten Ausführungsform der Erfindung bilden die Anschlusslasche, die Verbindungsklammer und das spiralförmige Ende des Brillenbügels ein Spiralfedergelenk. Dieses Spiralfedergelenk ermöglicht ein leichtgängiges Abwinkeln der Brillenbügel. Ferner verhindern die Spiralfedergelenke ein unkontrolliertes Aufspringen, der Brillenbügel, wie es z.B. beim Tragen der Brille in einer Hemdtasche passieren kann.

Des Weiteren wird die Aufgabe der vorliegenden Erfindung durch ein Verfahren zur Herstellung eines Brillengestells gelöst, wobei in einem ersten Schritt Brillengläser in die frontale Brillenfassung eingesetzt werden, die Verschlussklammer auf die Anschlusslaschen bis zum Einrasten aufgeschoben werden, dann die Brillenbügel mit ihren schmalen, äußersten, spiralförmig eingerollten Enden in die verbleibenden Schlitze der bereits durch die Verbindungsklammern geschlossenen Anschlusslaschen der frontalen Brillenfassung hindurchgeführt werden und die Brillenbügel nach hinten, in die von der Brillenfassung abgewandten Seite gezogen werden und dort einrasten. Dabei ist die Montage ohne Verwendung von Werkzeug möglich.

Im Folgenden wird die vorliegende Erfindung anhand von Figuren und eines Beispiels näher beschrieben. Im einzelnen zeigt
- Figur 1a und 1b: die Komponenten der vorliegenden Erfindung,
- Figur 2a und 2b: das frontale Brillengestell mit aufgeschobener Verbindungsklammer,
- Figur 3a und 3b: das Brillengelenk im montierten Zustand,
- Figur 4a und 4b: das Brillengestell im montierten zusammengefalteten Zustand
- Figur 5a und 5b: die Schwalbenschwanzverbindung,
- Figur 6: die Verbindungsklammer,
- Figur 7: das Ende des Brillenbügels mit dem spiralförmig gebogenen Ende,
- Figur 8a, 8b und 8c: das Spiralgelenk in verschiedenen Positionen beim Abknicken des Brillenbügels,
- Figur 9: die Anschlusslasche mit der Verbindungsklammer,
- Figur 10: verschiedene Ausführungsformen des oberen und unteren Elements,
- Figuren 11 a und b: die Vorder- und Rückseite einer frontalen Brillenfassung,
- Figuren 12 a und b: die Vorder- und Rückseite einer weiteren Ausführung der frontalen Brillenfassung,
- Figuren 13 a-c: eine Darstellung der Anschlusslasche,
- Figuren 14 a und b: die Anschlusslasche von Figur 13 a-c aus einem anderen Blickwinkel,
- Figuren 15 a-e: eine perspektivische Darstellung einer Ausführungsform der Elemente der Anschlusslasche,
- Figuren 16 a-e: eine weitere perspektivische Darstellung einer Ausführungsform der Elemente der Anschlusslasche,
- Figuren 17 a-e: eine noch eine weitere perspektivische Darstellung einer Ausführungsform der Elemente der Anschlusslasche und
- Figuren 18 a-e: eine weitere perspektivische Darstellung einer Ausführungsform der Anschlusslasche.

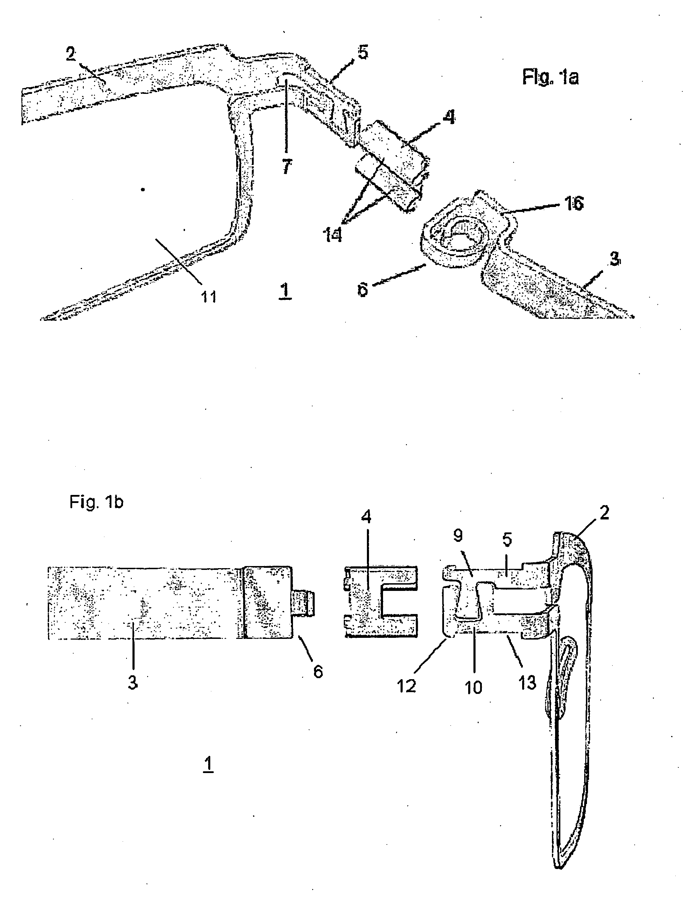

Die Figuren 1a und 1b zeigen das Brillengestell 1, bestehend aus einer frontalen Brillenfassung 2, zwei Brillenbügeln 3 und einer Verbindungsklammer 4. An der Brillenfassung 2 befinden sich zwei abgewinkelte Anschlusslaschen 5.

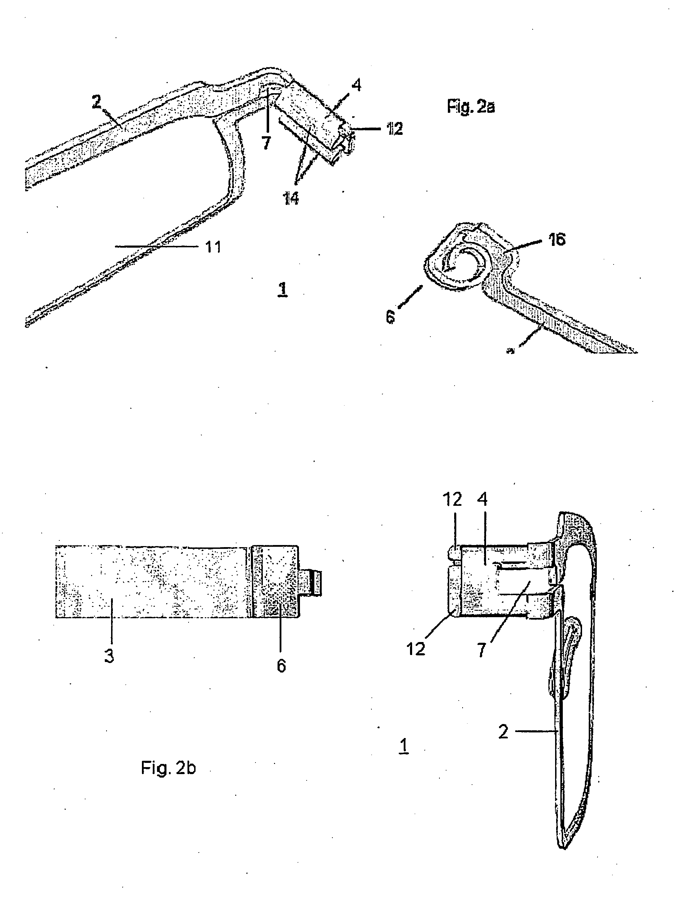

Die Figuren 2a und 2b zeigen das Brillengestell 1 aus zwei verschieden Blickwinkeln. Hier sind die Verbindungsklammer 4 bereits über die Anschlusslasche 5 gesteckt worden. Oberhalb bzw. unterhalb der schwalbenschwanzähnlichen Verbindung, an der oberen sowie an der unteren Kante der Anschlusslasche befinden sich jeweils eine Einbuchtung, die der Verbindungsklammer, die für den Zusammenhalt des oberen und unteren Elements sorgt, sicheren Halt bietet. Die Einbuchtungen an den Anschlusslaschen haben die Wirkung einer Sperrklinke, die beim Installieren der Verbindungsklammer dafür sorgen, dass sie nicht von der Fassung rutschen kann.

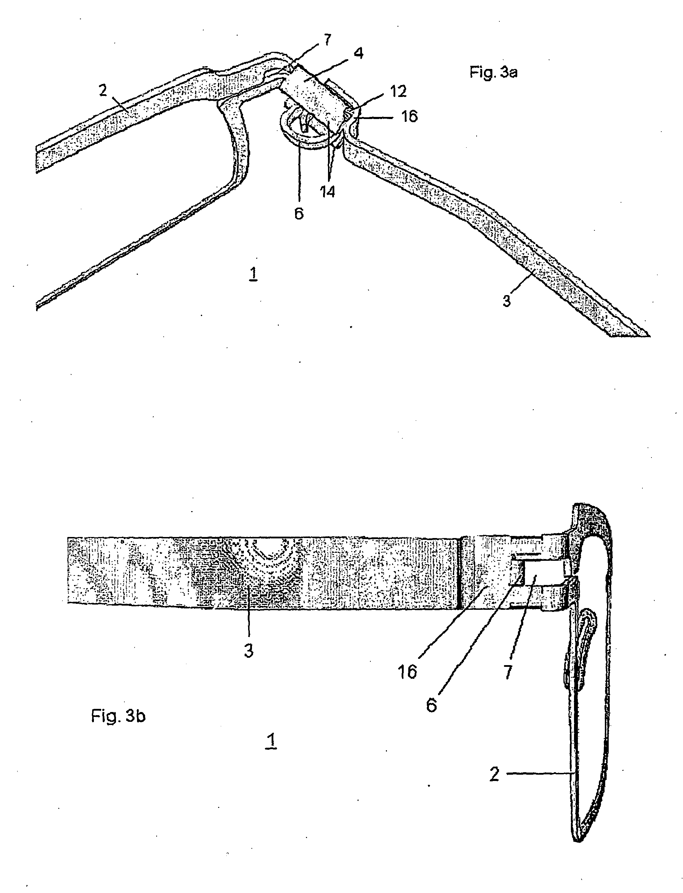

Die Figuren 3a und 3b zeigen perspektivische Ansichten des Brillengestells 1, bei dem die frontale Brillenfassung 2 mit den Brillenbügeln 3 durch eine Verbindungsklammer 4 miteinander verbunden ist. Dabei umfasst das spiralförmige Ende 6 des Brillenbügels 3 die Anschlusslasche 5 und die Verbindungsklammer 4.

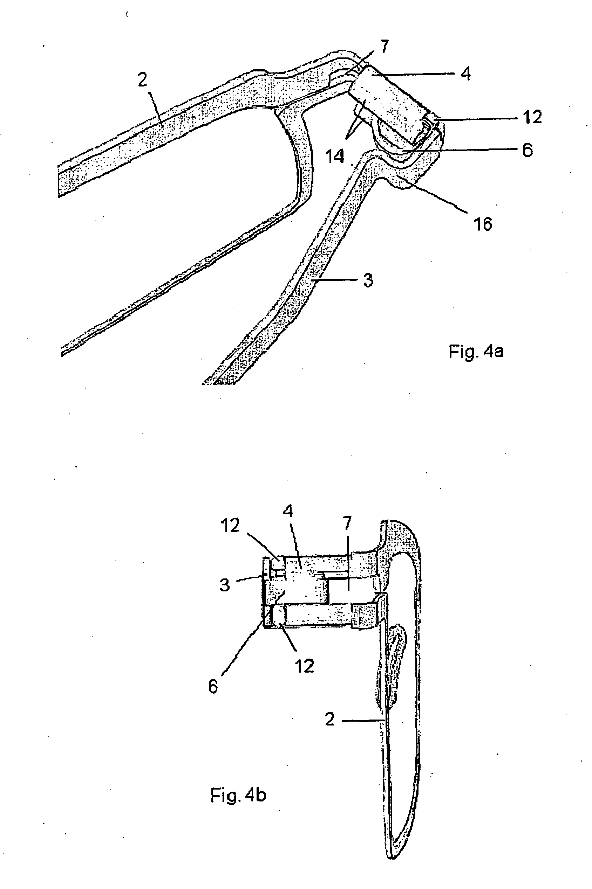

Die Figuren 4a und 4b zeigen die gleichen Ansichten wie die Figuren 3a und 3b jedoch bei einer zugeklappten Brille.

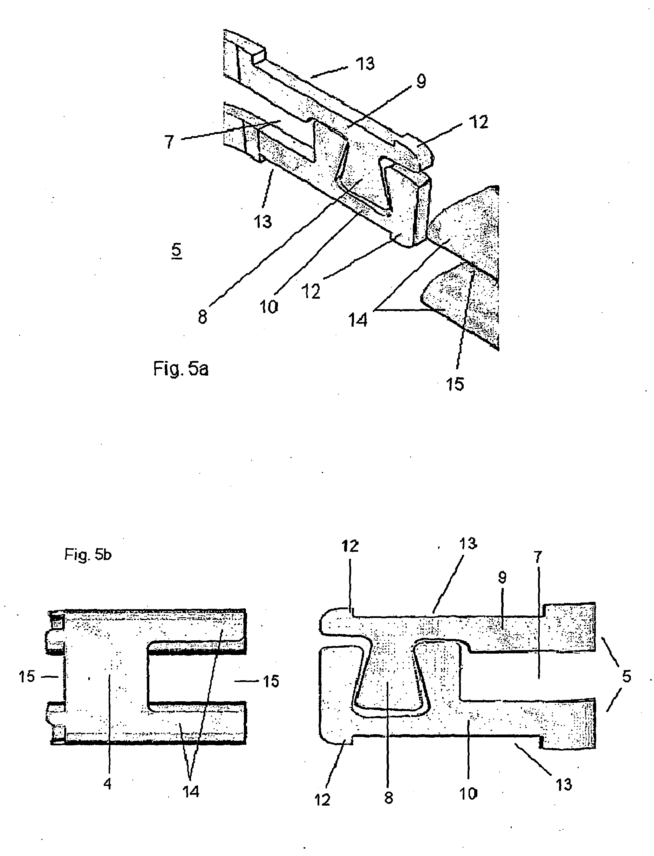

Die Figuren 5a und 5b zeigen die Anschlusslasche 5 mit der Öffnung 7. Die Öffnung 7 der frontalen Brillenfassung 2 wird durch eine Schwalbenschwanzverbindung 8 geschlossen. Die Schwalbenschwanzverbindung 8 wird durch ein oberes Element 9 und ein unteres Element 10 der Anschlusslasche 5 gebildet. Die Anschlusslasche 5 weist Vorrichtungen auf, die ein Einrasten der Verbindungsklammer 4 ermöglichen. Diese Vorrichtungen können auf verschiede Arten die Anschlusslasche 5 vor einem Herausrutschen bewahren, so kann die Anschlusslasche 5 mit einer Verstärkung 12 des Materials und/oder durch eine Vertiefung 13 ausgebildet sein.

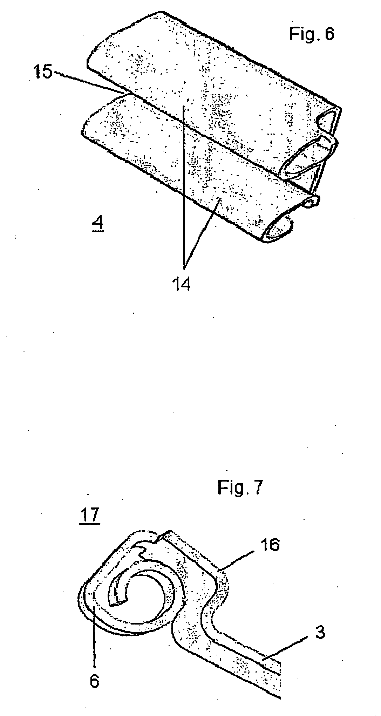

Die Figur 6 zeigt die Verbindungsklammer 4, die zwei eingerollte Flanken 14 aufweist. Die Flanken 14 bilden einen Kanal 15, in den das spiralförmige Ende 6 des Brillenbügels 3 eingeschoben wird.

Die Figur 7 zeigt ein spiralförmiges Ende 6 des Brillenbügels 3. Der Brillenbügel 3 bildet an seinem der Brillenfassung 2 zugewandten, vorderen Ende eine treppenförmige Bucht 16 in der das schmalere, äußere Ende des Brillenbügels 3 zunächst abgewinkelt, dann spiralförmig eingerollt ist. Die treppenförmige Prägung am vorderen Ende des Brillenbügels 3 hat darüber hinaus die Funktion, den Brillenbügel 3 sicher in seiner montierten Position festzuhalten.

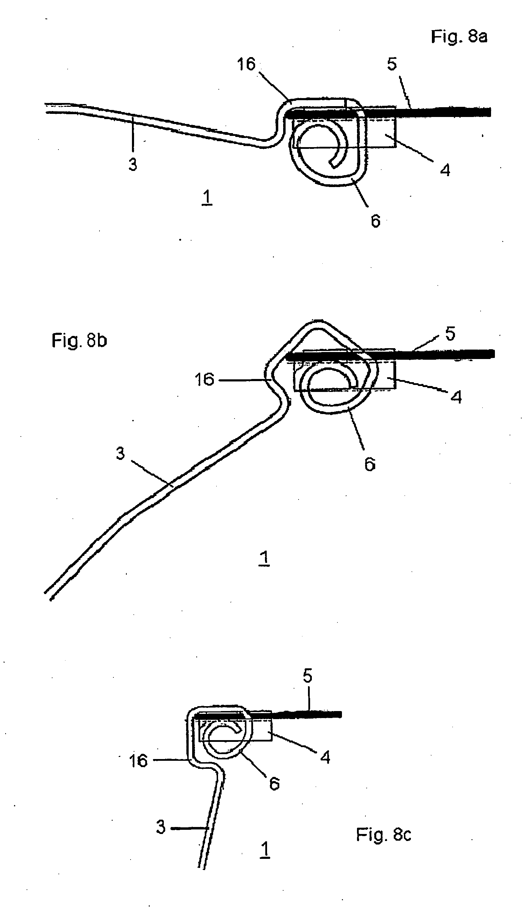

Die Figur 8a zeigt den Brillenbügel 3 in geöffneter Stellung. Die in den Figuren 5a und 5b dargestellte Schwalbenschwanzverbindung 8 bildet in Verbindung mit einem Teil der Verbindungsklammer 4 die Gelenkebene des Spiralfedergelenks 17. Um diese Fläche 18 dreht sich das vordere Ende 6 des Brillenbügels 3, der durch das spiralförmige Ende 6 und die treppenförmige Bucht 16 gebildet wird.

Die Fläche der Schwalbenschwanzverbindung 8 wird zwischen der treppenförmig geprägten Bucht 16 und dem äußeren Ende 6 des Brillenbügels 3, der Spiralfeder aufgrund der ihr innewohnenden Federkraft eingeklemmt. In dieser statischen Position wird der Brillenbügel 3 fest an der Anschlusslasche 5 gehalten.

Die Figur 8b zeigt den Brillenbügel 3 im Moment des Umschlags. Das spiralförmige Ende 6 des Brillenbügels 3 mit der Bucht 16 muss sich um die Fläche, die durch die Schwalbenschwanzverbindung 8 gebildet wird, winden, um den geschlossenen Zustand, der in Figur 8c gezeigt ist einzunehmen. Bei diesem Prozess wird die Spiralfeder von der Fläche 18 (Gelenkebene) verdrängt. Ist ein bestimmter Punkt beim Einschlagen des Brillenbügels 3 erreicht, schnappt der Brillenbügel 3 in die zusammengeklappte Position über, die in Figur 8c dargestellt ist.

Die Figur 8c zeigt den Brillenbügel 3 im zusammengeklappten Zustand. In der Figur 8c befindet sich der Brillenbü-gel 3 erneut in einem statischen Zustand. Die Spiralfeder hat sich gespreizt und um die Fläche 18 herum gewunden. Nun ist erneut ein Zustand wie in Figur 8a eingetreten. Die Fläche 18 der Schwalbenschwanzverbindung 8 ist zwischen der treppenförmig geprägten Bucht 16 und dem äußersten Ende des Brillenbügels 3 der Spiralfeder aufgrund der ihr innewohnenden Federkraft eingeklemmt, mit dem Unterschied, dass der Brillenbügel 3 nun nicht mehr aufgeschlagen ist, sondern zusammengeklappt an der frontalen Brillenfassung 2 anliegt.

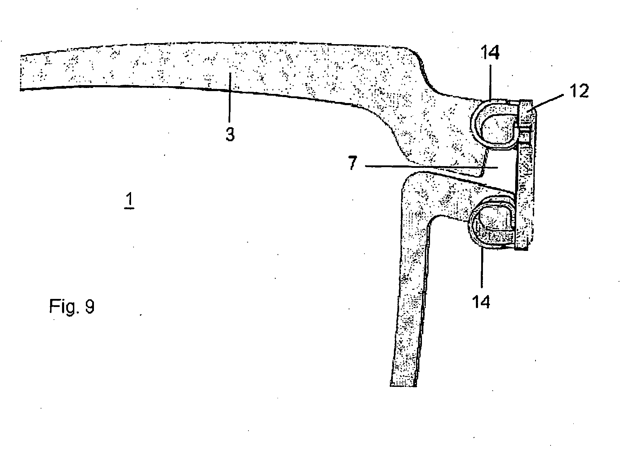

Die Figur 9 zeigt die frontale Brillenfassung 2 mit der Anschlusslasche 5, auf die die Verschlussklammer 4 aufgesteckt ist. Die beiden Flanken 14 der Verschlussklammer umfassen die Anschlusslasche 5 und verhindern ein Auseinanderdriften des oberen und unteren Elements 9, 10.

Zur Fixierung der Verschlussklammer 4 befinden sich an den Enden des oberen und unteren Elements 9, 10 Verstärkungen 12, die ein Verrutschen der Verbindungsklammer 4 verhindern.

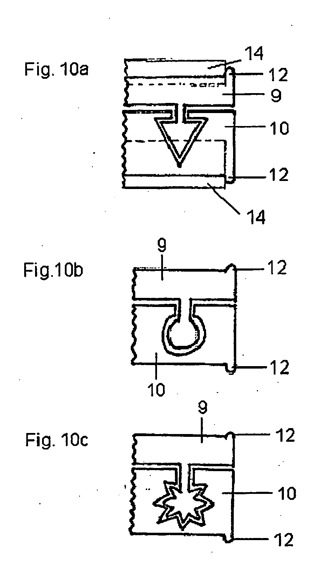

Die Figuren 10a, 10b und 10c zeigen verschiedene Ausführungsformen der Verbindung zwischen dem oberen Element 9 und dem unteren Element 10 der Anschlusslasche 5.

In der Figur 10a ist die Verschlussklammer 4 über die Anschlusslasche 5 gesteckt dargestellt. Eine der beiden gerollten Flanken 14 überdeckt dabei sowohl das obere Element 9 als auch das untere Element 10, wie die untere gestrichelte Linie in Figur 10a zeigt. Es ist jedoch auch möglich, dass beide Flanken 14 sowohl das obere Element 9 als auch das untere Element 10 bedecken. Durch diese Abdeckung beider Elemente 9, 10 wird eine stabile Verbindung erzielt.

Wird nur das obere Element 9 oder nur das untere Element 10 durch eine der Flanken 14 abgedeckt, so kann sich die Verbindung durch ein Herausrutschen eines der beiden Elemente 9 oder 10 lösen.

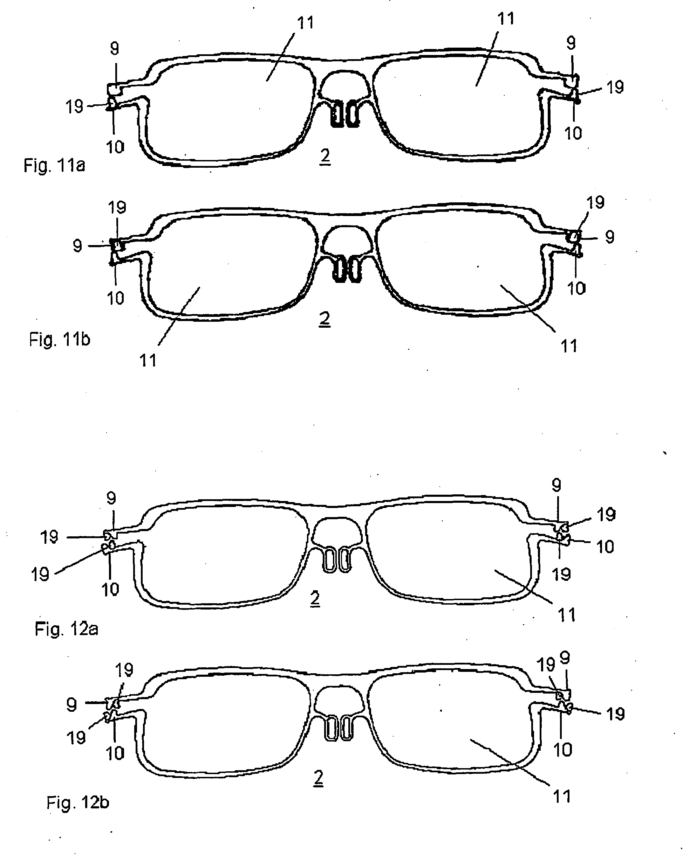

In der Figur 11a wird die Rückseite und in der Figur 11b die Vorderseite einer Ausführungsform des Brillengestells 1 gezeigt, bei der das untere Element 10 auf der einen Seite um 50 % in seiner Materialstärke reduziert wurde, so dass ein Teil mit einer verminderten Materialstärke 19 entsteht. Das obere Element 9 ist derart ausgeprägt, dass es in seiner Mitte ebenfalls einen Teil mit einer verminderten Materialstärke 19 aufweist, in den der Teil mit der verminderten Materialstärke 19 des Elements 10 passt. Der Teil mit der verminderten Materialstärke 19 des unteren Elements 10 ist dabei derart ausgeprägt, dass er gegen die Teile mit normaler Materialstärke des oberen Elements 9 stößt. Hierdurch wird eine Verschiebung der beiden Elemente 9 und 10 in +z- und -z-Richtung unterbunden. Wird eine Verschlussklammer 4 über die beiden Elemente 9 und 10 der Anschlusslasche 5 geschoben, dann wird ein Verschieben der Elemente 9 und 10 gegeneinander in allen sechs Raumrichtungen unterbunden.

In den Figuren 12a und 12b wird eine der in den Figuren 11a und 11b gezeigte Ausführungsform ähnliche Ausführungsform gezeigt. Die Figur 12a zeigt dabei die Rückseite und die Figur 12b die Vorderseite dieser Ausführungsform, bei der beide Elemente 9, 10 zwei Teile mit verminderter Materialstärke 19 aufweisen, die geringfügig voneinander versetzt angebracht sind, so dass Sie sich teilweise überlappen. Dadurch wird eine Verschiebung der Elemente 9, 10 auf der +x- und -x-, -y-, + z- und -z-Raumrichtung unterbunden.

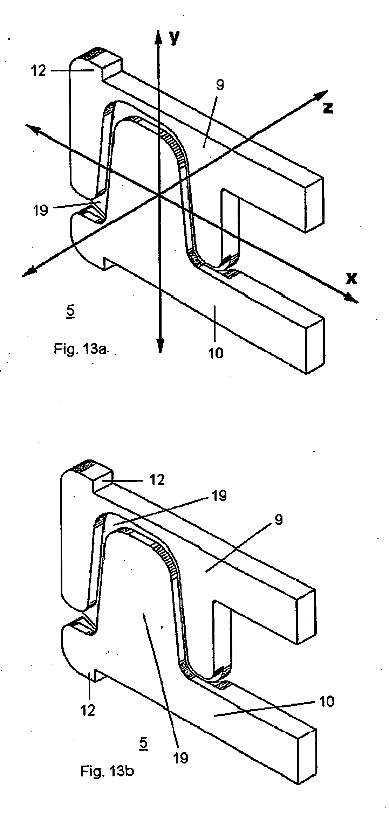

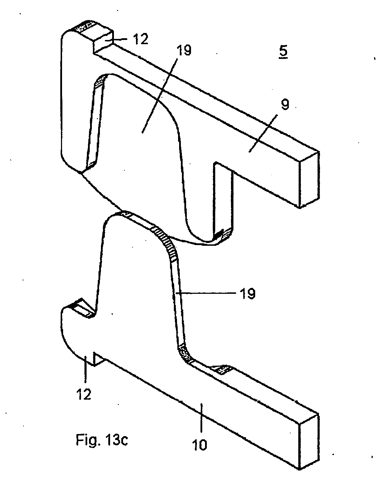

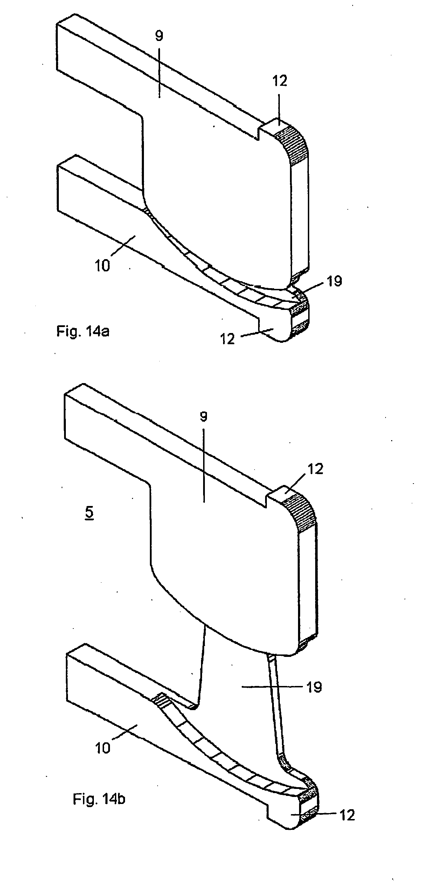

Die Figuren 13 a-c und die Figuren 14 a und b zeigen eine Ausführungsform der Anschlusslasche 5, bei der ein Materialstärke belassen wurden, wie die frontale Brillenfassung 2, wird ein Verschieben des oberen gegen das untere Element 9, 10 in die -z-, -y-, +x- und -x-Raumrichtungen gesperrt.

In der Figur 13b wird die gleiche Ausführungsform der Anschlusslasche 5 wie in der Figur 13a gezeigt, bei der das obere und das untere Element 9, 10 auf einander liegen.

Die Figur 13c zeigt eine gleiche Ausführungsform wie in Figur 13b, bei der das obere und das untere Element 9, 10 in y-Richtung voneinander weg verschoben dargestellt sind.

Die Figuren 14a und 14b zeigen jeweils die Rückansicht der in den Figuren 13b und 13c dargestellten Ausführungsform der Anschlusslasche 5.

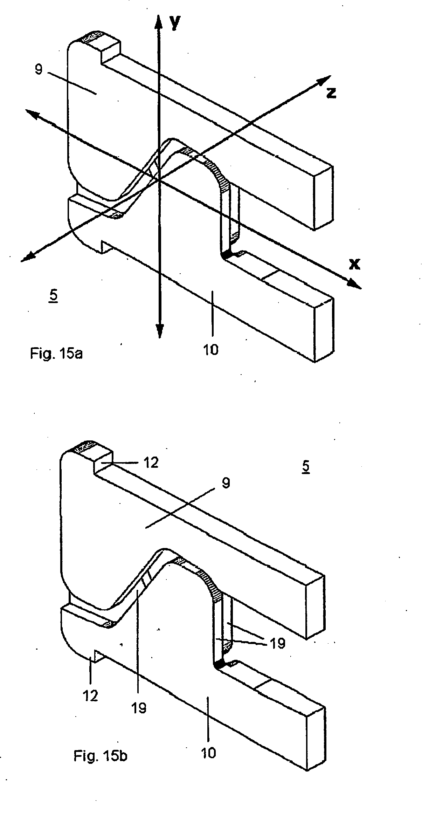

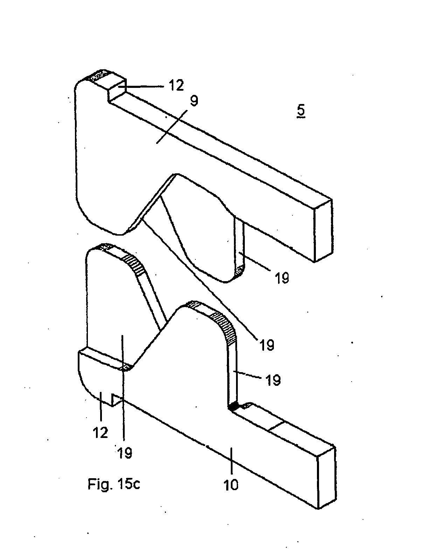

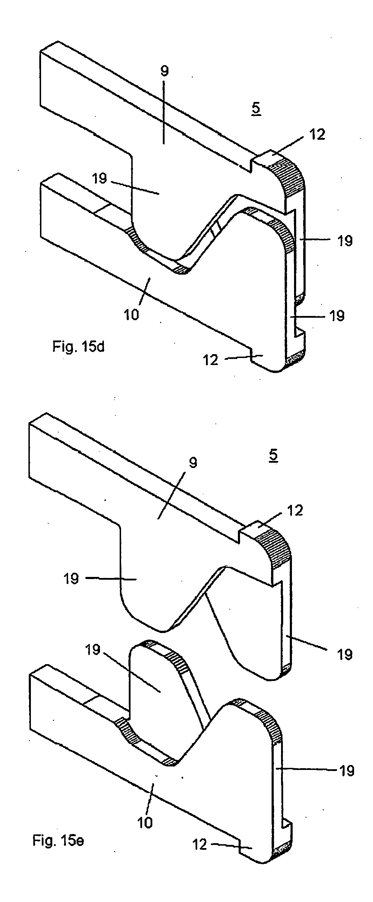

In den Figuren 15 a-e wird eine weitere Ausführungsform der Anschlusslasche 5 gezeigt. In dieser Ausführungsform sind das obere Element 9 und das untere Element 10 derart ausgestaltet, dass ein Verschieben in fünf Raumrichtungen gesperrt ist. So ist es nicht möglich, das obere und untere Element 9, 10 auf der x- und der z-Achse zu verschieben. Ein Verschieben auf der y-Asche ist nur in einer Raumrichtung möglich, nämlich, indem die beiden Elemente von einander weg verschoben werden (+y), wie in der Figur 15c und 15e dargestellt. Ein Freiheitsgrad in -yRaumrichtung ist notwendig, damit die frontale Brillenfassung 2 geöffnet werden kann, um die Brillengläser einzufügen.

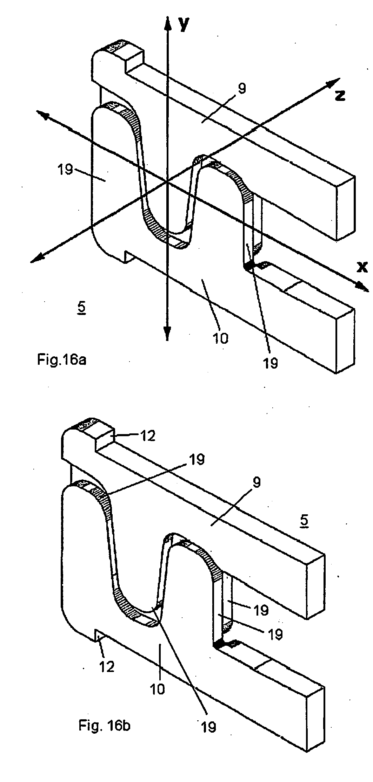

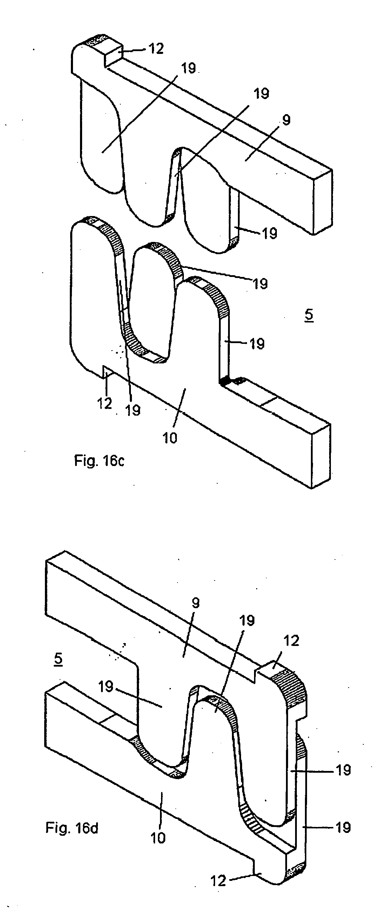

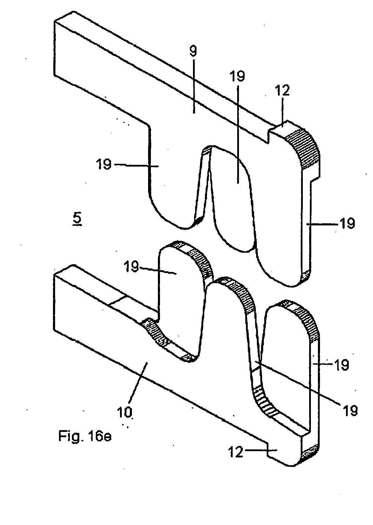

In den Figuren 16a bis 16e wird eine perspektivische Darstellung der Anschlusslasche 5 gezeigt, bei der das obere und untere Element 9, 10 der Anschlusslasche jeweils aus drei Teile mit verminderter Materialstärke besteht, die derart versetzt angebracht sind, dass sie ein Verschieben der Elemente 9, 10 in +x-, -x-, +z- und -z- sowie in einer -y-Raumrichtung verhindern. In dieser Ausführungsform der Anschlusslasche 5 ist zumindest eine Raumrichtung (+y) nicht gesperrt, so dass die frontale Brillenfassung geöffnet werden kann um einen einfachen Wechsel der Brillengläser zu ermöglichen. Damit diese letzte verbleibende Raumrichtung auch gesperrt ist, wird über die Anschlusslasche 5 eine Verschlussklammer 4 geschoben, die gegen ein Herausrutschen durch an den äußeren Enden der Anschlusslasche 5 angebrachten Verstärkungen 12 gesichert ist.

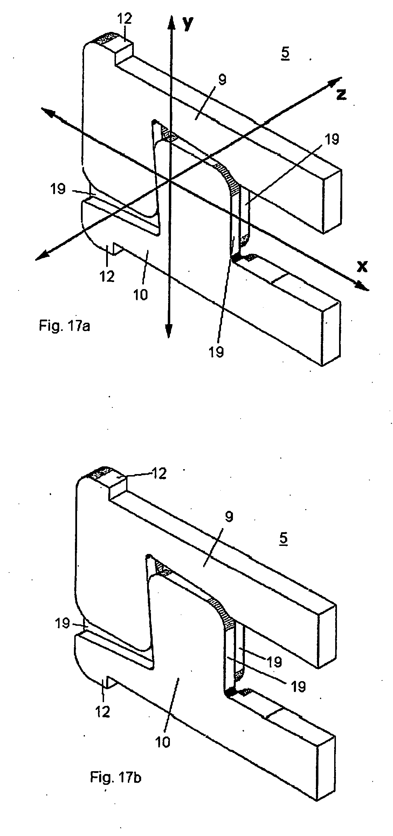

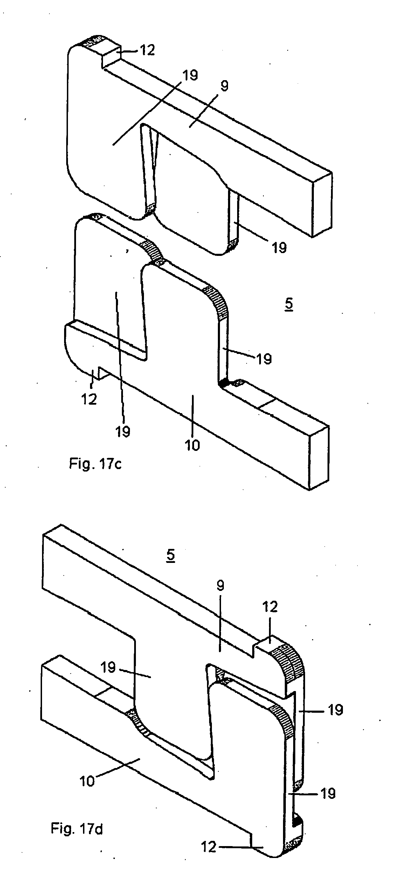

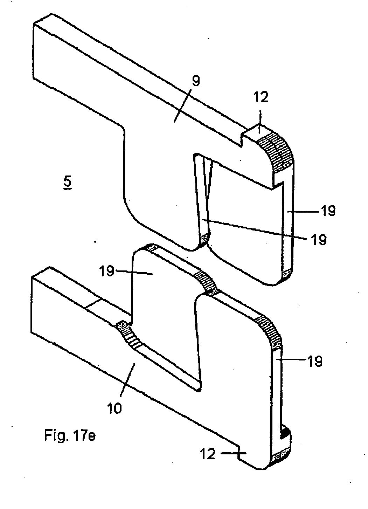

In den Figuren 17 a-e und 18 a-e werden Ausführungsformen der Anschlusslasche 5 gezeigt, die, wenn das obere Element 9 gegen das untere Element 10 gedrückt wird, ineinander verrasten. Diese Ausführungsform der Anschlusslasche 5 ermöglicht es somit, auf die Verwendung einer Verschlussklammer 4 zu verzichten. Es ist jedoch auch möglich eine Verschlussklammer 4 als zusätzliche Sicherung anzubringen.

Die Figuren 17 a-e zeigen eine Ausführungsform der Anschlusslasche, bei der sowohl das untere Element 10 als auch das obere Element 9 jeweils zwei Teile mit verminderter Materialstärke aufweisen, die ein Verschieben in alle sechs Raumrichtungen verhindern. Zusätzlich sind die Teile mit verminderter Materialstärke 19 in einer schwalbenschwanzähnlichen Weise baulich verbreitert, so dass, wenn das obere Element 9 und das untere Element 10 ineinander gesteckt werden, sie nur durch Aufbringung einer erhöhten Kraft wieder auseinander gezogen werden können.

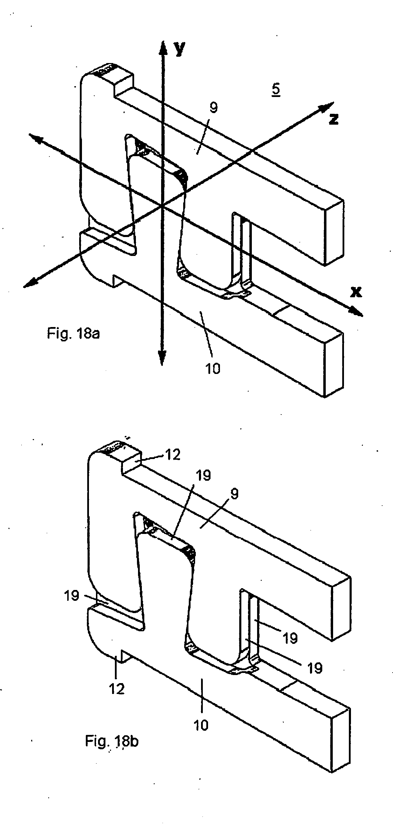

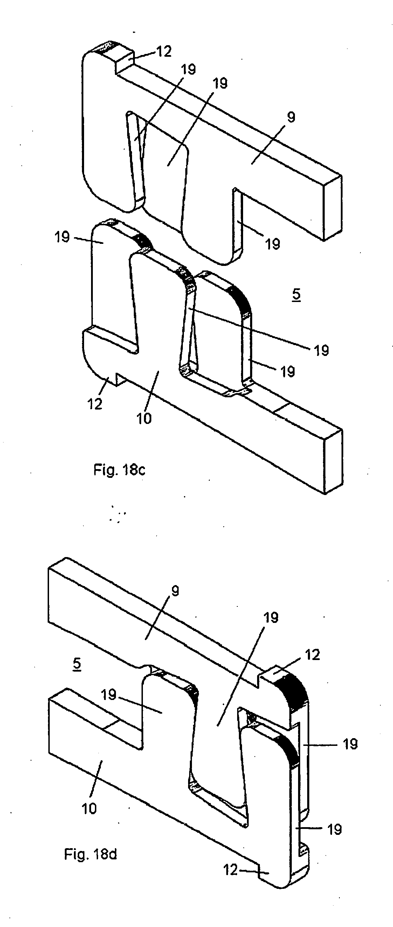

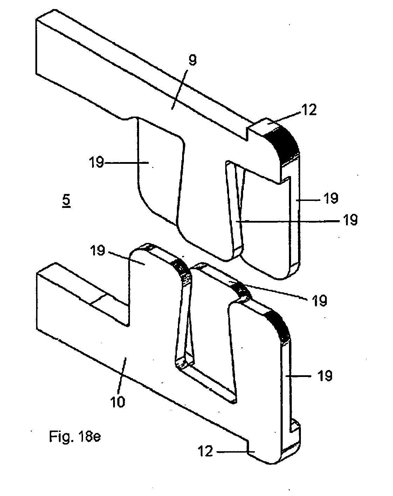

Auch die Figuren 18 a-e zeigen eine Ausführungsform, bei der eine Verschieben der Elemente 9, 10 der Anschlusslasche 5 in allen Raumrichtungen gesperrt ist. In der in den Figuren 18 a-e gezeigten Ausführungsform weisen das obere Element 9 und das untere Element 10 jeweils drei Teile mit verminderter Materialstärke 19 auf.

### Beispiel zur Montage der Komponenten:

zunächst wird das mit einer Nut versehene Brillenglas in die frontale Brillenfassung 2 eingesetzt, und die Verbindungsklammer 4 soweit aufgeschoben, bis sie in der Vertiefung 13 (Ausbuchtungen) der Anschlusslasche 5 einrastet. Sodann wird der Brillenbügel 3 mit seiner schmalen, äußersten, spiralförmig eingerollten Ende 6 in den verbleibenden Schlitz der bereits durch die Verbindungsklammer 4 geschlossenen Anschlusslasche 5 der frontalen Brillenfassung 2 hindurchgeführt. Ist dies geschehen, wird der Brillenbügel 3 nach hinten in die vom Brillenrahmen abgewandte Seite gezogen. Dabei spreizt sich das spiralförmig eingerollte Ende 6 des Brillenbügels 3 leicht von der treppenförmig geprägten Bucht 16 ab, bis diese das hintere Ende der Anschlusslasche 5 erreicht hat und dort einrastet. Nun ist das integrale Spiralfedergelenk 17 einsatzbereit. Für die Montage werden keine Werkzeuge benötigt.

### Bezugszeichenliste:

- 1: Brillengestell
- 2: frontale Brillenfassung
- 3: Brillenbügel
- 4: Verschlussklammer
- 5: Anschlusslasche
- 6: spiralförmiges Ende
- 7: Öffnung
- 8: Schwalbenschwanzverbindung
- 9: oberes Element
- 10: unteres Element
- 11: Aussparung (für Brillengläser)
- 12: Verstärkung
- 13: Vertiefung
- 14: Flanke
- 15: Kanal
- 16: Bucht
- 17: Spiralfedergelenk
- 18: Fläche
- 19.: Teil mit verminderter Materialstärke

## Patentansprüche

1. Brillengestell (1) bestehend aus einer frontalen Brillenfassung (2), Verbindungsklammern (4) und zwei Brillenbügeln (3), **dadurch gekennzeichnet, dass**
die frontale Brillenfassung (2) Anschlusslaschen (5) aufweist, wobei die Anschlusslaschen (5) aus einem oberen Element (9) und einem unteren Element (10) bestehen, die ineinander greifen,
die Verbindungsklammern (4) über die Anschlusslaschen (5) gesteckt sind und
die Brillenbügel (3) ein spiralförmig eingerolltes Ende (6) aufweisen, mit dem sie die Anschlusslasche (5) und die Verbindungsklammer (4) umfassen.

2. Brillengestell (1) nach Anspruch 1, **dadurch gekennzeichnet, dass** der Brillenbügel (3) an seinem der frontalen Brillenfassung zugewandten, vorderen Ende eine treppenförmig geprägte Bucht (16) aufweist, in die das schmalere, äußere Ende (6) des Brillenbügels (3) zunächst abgewinkelt, dann spiralförmig eingerollt ist.

3. Brillengestell (1) nach einem der Ansprüche 1 oder 2, **dadurch gekennzeichnet, dass** die frontale Brillenfassung (2) im Wesentlichen eine Ebene bildet, wobei Anschlusslaschen (5) von der Brillenfassung (2) angewinkelt positioniert sind.

4. Brillengestell (1) nach einem der Ansprüche 1 bis 3, **dadurch gekennzeichnet, dass** die Elemente (9, 10) der Anschlusslasche (5) derart ineinander greifen, dass die Elemente (9, 10) in mindestens drei Raumrichtungen nicht gegeneinander verschiebbar sind.

5. Brillengestell (1) nach einem der Ansprüche 1 bis 4, **dadurch gekennzeichnet, dass** die Anschlusslaschen (5) aus einem oberen und einem unteren Element (9, 10) bestehen, die zusammen eine schwalbenschwanzähnliche Verbindung (8) bilden.

6. Brillengestell (1) nach einem der Ansprüche 1 bis 4, **dadurch gekennzeichnet, dass** die Elemente (9, 10) der Anschlusslasche (5) mindestens einen Teil mit einer verminderten Materialstärke (19) und mindestens eines der Elemente (9, 10) wenigstens einen Teil in der normalen Materialstärke aufweisen, wobei die Elemente (9, 10) derart ineinander greifen, dass die Teile mit der verminderten Materialstärke (19) jeweils aufeinander liegen.

7. Brillengestell (1) nach einem der Ansprüche 1 bis 4, **dadurch gekennzeichnet, dass** das obere und das untere Element (9, 10) der Anschlusslasche (5) ineinander verastbar sind.

8. Brillengestell (1) nach einem der Ansprüche 1 bis 7, **dadurch gekennzeichnet, dass** die Anschlusslasche (5) Vorrichtungen aufweist, durch die die Verbindungsklammer (4) am Verrutschen gehindert wird.

9. Brillengestell (1) nach Anspruch 8, **dadurch gekennzeichnet, dass** die Vorrichtungen eine Verstärkung (12) an der Außenseite der Anschlusslasche (5) und/oder eine Vertiefung (13) in der Anschlusslasche (5) ist.

10. Brillengestell (1) nach einem der Ansprüche 1 bis 9, **dadurch gekennzeichnet, dass** die Verbindungsklammer (4) die Anschlusslasche (5) umfasst, so dass die Elemente (9, 10) der Anschlusslasche (5) in allen sechs Raumrichtung nicht verschiebbar sind.

11. Brillengestell (1) nach einem der Ansprüche 1 bis 10, **dadurch gekennzeichnet, dass** die beiden eingerollten Flanken (14) der Verbindungsklammer (4) einen Kanal (15) bilden, in der die Spiralfeder des Brillenbügels (3) positioniert ist.

12. Brillengestell (1) nach einem der Ansprüche 1 bis 11, **dadurch gekennzeichnet, dass** die Anschlusslasche (5), die Verbindungsklammer (4) und das spiralförmige Ende (6) des Brillenbügels (3) ein Spiralfedergelenk (17) bilden.

13. Verfahren zur Herstellung eines Brillengestells (1) nach einem der vorhergehenden Ansprüche, **dadurch gekennzeichnet, dass** in einem ersten Schritt Brillengläser in die frontale Brillenfassung (2) eingesetzt werden, die Verbindungsklammern (4) auf die Anschlusslaschen (5) bis zum Einrasten aufgeschoben werden, dann die Brillenbügel (3) mit ihren schmalen, äußeren, spiralförmig eingerollten Enden (6) in die verbleibenden Schlitze der bereits durch die Verbindungsklammern (4) geschlossenen Anschlusslaschen (5) der frontalen Brillenfassung (2) hindurchgeführt werden und die Brillenbügel (3) nach hinten, in die von der. Brillenfassung (2) abgewandten Seite gezogen werden.

## Claims

1. The eyeglass frame (1), consisting of a frontal eyeglass rim (2), connecting clips (4) and two eyeglass temples (3), **characterized in that**
the frontal eyeglass rim (2) has connecting brackets (5) wherein the connecting brackets (5) consist of an upper element (9) and a lower element (10), which grip each other,
the connecting clips (4) are inserted over connecting brackets (5) and
the eyeglass temples (3) have an spiral-shaped, curled end (6) embracing the connecting bracket (5) and connecting clip (4).

2. The eyeglass frame (1) according to claim 1, **characterized in that** eyeglass temple (3) at its front end facing the frontal eyeglass rim has a stepped shaped identation (16) into which the narrower outer end (6) of the eyeglass temple (3) is bent first, then spirally curled.

3. The eyeglass frame (1) according to one of claims 1 or 2, **characterized in that** the frontal eye glass rim (2) essentially forms a plane wherein the connecting brackets (5) are positioned in a bent angle in relation to eyeglass rim (2).

4. The eyeglass frame (1) according to one of claims 1 to 3, **characterized in that** the elements (9, 10) of connecting bracket (5) grip each other in such a way, that the elements (9, 10) cannot be mutually displaced in at least three spatial directions.

5. The eyeglass frame (1) according to one of claims 1 to 4, **characterized in that** the connecting brackets (5) consist of an upper and lower element (9, 10) which together form a dovetail-like linkage (8).

6. The eyeglass frame (1) according to one of claims 1 to 4, **characterized in that** the elements (9, 10) of the connecting bracket (5) have at least one portion of reduced material thickness (19) and at least one of the elements (9, 10) has at least one portion of normal material thickness, the elements (9, 10) gripping each other in such a way that the portions of reduced material thickness (19) respectively lie on one another.

7. The eyeglass frame (1) according to one of claims 1 to 4, **characterized in that** the upper and lower element (9, 10) of the connecting bracket (5) can lock in place in each other.

8. The eyeglass frame (1) according to one of claims 1 to 7, **characterized in that** the connecting bracket (5) has mechanisms by means of which the connecting clip (4) is prevented from slipping.

9. The eyeglass frame (1) according to claim 8, **characterized in that** the mechanism is a projection (12) on the outer side of the connecting bracket (5) and/or a depression (13) in the connecting bracket (5).

10. The eyeglass frame (1) according to one of claims 1 to 9, **characterized in that** the connecting clips (4) embrace the connecting bracket (5), so that the elements (9, 10) of the connecting bracket (5) cannot be displaced in all six spatial directions.

11. The eyeglass frame (1) according to one of claims 1 to 10, **characterized in that** the two curled flanks (14) of connecting clip (4) form a channel (15), in which the coil spring of eyeglass temple (3) is positioned.

12. The eyeglass frame (1) according to one of claims 1 to 11, **characterized in that** the connecting bracket (5), the connecting clip (4) and the spiral-shaped end (6) of the eyeglass temple (3) form a coil spring hinge.

13. A process for producing an eyeglass frame (1) according to one of the preceding claims, **characterized in that**, in a first step, eyeglass lenses are inserted into the frontal eyeglass rim (2), the connecting clips (4) are pushed onto the connecting brackets (5) until they lock in place, then the eyeglass temples (3), by their narrow, outermost, spiral-shaped, curled ends (6) are passed into the remaining slots of the connecting brackets (5) of the frontal eyeglass rim (2), which have already been closed by the connecting clips (4), and the eyeglass temples (3) are pulled back, into the side facing away from the eyeglass rim (2).

## Revendications

1. Monture de lunettes (1), constituée d'une partie de monture frontale (2), de pinces de connexion (4) et de deux branches de lunettes (3), **caractérisée en ce que**
la partie de monture frontale (2) présente des pattes de raccordement (5), les pattes de raccordement (5) se composant d'un élément supérieur (9) et d'un élément inférieur (10) qui viennent en prise l'un dans l'autre,
les pinces de connexion (4) sont enfichées par dessus les pattes de raccordement (5) et
les branches de lunettes (3) présentent une extrémité (6) enroulée en spirale, avec laquelle elles entourent la patte de raccordement (5) et la pince de connexion (4).

2. Monture de lunettes (1) selon la revendication 1, **caractérisée en ce que** la branche de lunettes (3) présente à son extrémité avant tournée vers la partie de monture frontale, une petite anse (16) imprimée en forme de marche, dans laquelle l'extrémité extérieure plus étroite (6) de la branche de lunettes (3) est d'abord coudée, puis enroulée en spirale.

3. Monture de lunettes (1) selon l'une quelconque des revendications 1 ou 2, **caractérisée en ce que** la partie de monture frontale (2) forme essentiellement un plan, des pattes de raccordement (5) étant positionnées de manière coudée par rapport à la partie de monture frontale (2).

4. Monture de lunettes (1) selon l'une quelconque des revendications 1 à 3, **caractérisée en ce que** les éléments (9, 10) de la patte de raccordement (5) viennent en prise l'un dans l'autre de telle sorte que les éléments (9, 10) ne puissent pas être bougés l'un par rapport à l'autre dans au moins trois directions spatiales.

5. Monture de lunettes (1) selon l'une quelconque des revendications 1 à 4, **caractérisée en ce que** les pattes de raccordement (5) se composent d'un élément supérieur et d'un élément inférieur (9, 10) qui forment ensemble une connexion en forme de queue d'aronde (8).

6. Monture de lunettes (1) selon l'une quelconque des revendications 1 à 4, **caractérisée en ce que** les éléments (9, 10) de la patte de raccordement (5) présentent au moins une partie avec une épaisseur de matériau réduite (19) et au moins l'un des éléments (9, 10) présente au moins une partie d'épaisseur de matériau normale, les éléments (9, 10) venant en prise l'un dans l'autre de telle sorte que les parties d'épaisseur de matériau réduite (19) s'appliquent à chaque fois l'une sur l'autre.

7. Monture de lunettes (1) selon l'une quelconque des revendications 1 à 4, **caractérisée en ce que** l'élément supérieur et l'élément inférieur (9, 10) de la patte de raccordement (5) peuvent s'encliqueter l'un dans l'autre.

8. Monture de lunettes (1) selon l'une quelconque des revendications 1 à 7, **caractérisée en ce que** la patte de raccordement (5) présente des dispositifs qui empêchent le décentrage de la pince de connexion (4).

9. Monture de lunettes (1) selon la revendication 8, **caractérisée en ce que** les dispositifs sont constitués par un renforcement (12) au niveau du côté extérieur de 1a patte de raccordement (5) et/ou par un renfoncement (13) dans la patte de raccordement (5).

10. Monture de lunettes (1) selon l'une quelconque des revendications 1 à 9, **caractérisée en ce que** la pince de connexion (4) entourent la patte de raccordement (5), de telle sorte que les éléments (9, 10) de la patte de raccordement (5) ne puissent pas bouger dans les six directions spatiales.

11. Monture de lunettes (1) selon l'une quelconque des revendications 1 à 10, **caractérisée en ce que** les deux flancs enroulés (14) de la pince de connexion (4) forment un canal (15) dans lequel est positionné le ressort spiral de la branche de lunettes (3).

12. Monture de lunettes (1) selon l'une quelconque des revendications 1 à 11, **caractérisée en ce que** la patte de raccordement (5), la pince de connexion (4) et l'extrémité en forme de spirale (6) de la branche de lunettes (3) forment une articulation à ressort spiral (17).

13. Procédé de fabrication d'une monture de lunettes (1) selon l'une quelconque des revendications précédentes, **caractérisé en ce que** dans une première étape, on enchâsse des verres de lunettes dans la partie de monture frontale (2), les pinces de connexion (4) sont poussées sur les pattes de raccordement (5) jusqu'à ce qu'elles soient encliquetées, puis les branches de lunettes (3) avec leurs extrémités étroites extérieures (6) enroulées en spirale, sont passées à travers les fentes restantes des pattes de raccordement (5) de la partie de monture frontale (2), déjà fermées par les pinces de connexion (4), et les branches de lunettes (3) sont tirées vers l'arrière dans le côté opposé à la partie de monture frontale (2).
